# EUROPEAN PATENT SPECIFICATION

(11) **EP 2 557 705 B1**
(45) Date of publication and mention of the grant of the patent: **13.06.2018**
(21) Application number: 11859646.9
(22) Date of filing: 22.08.2011
(51) Int. Cl.: H04J 14/02, H04B 10/071

(54) **METHOD, APPARATUS AND OPTICAL NETWORK SYSTEM FOR DETECTING FAULT IN OPTICAL DISTRIBUTION NETWORK**
VERFAHREN, VORRICHTUNG UND OPTISCHES NETZWERKSYSTEM ZUR FEHLERERKENNUNG IN EINEM OPTISCHEN VERTEILUNGSNETZWERK
PROCÉDÉ, APPAREIL ET SYSTÈME DE RÉSEAU OPTIQUE POUR DÉTECTER UN DÉFAUT DANS UN RÉSEAU DE DISTRIBUTION OPTIQUE

(43) Date of publication of application: 13.02.2013
(73) Proprietor: Huawei Technologies Co., Ltd., Longgang District Shenzhen, Guangdong 518129 (CN)
(72) Inventor: ZHAO, Jun, Shenzhen Guangdong 518129 (CN); CHEN, Bo, Shenzhen Guangdong 518129 (CN)
(74) Representative: Körber, Martin Hans
(86) International application number: PCT/CN2011/078712
(87) International publication number: WO 2012/149709

(56) References cited:
- WO-A1-96/31022
- CN-A- 1 089 414
- CN-A- 1 874 193
- FR-A1- 2 739 992
- US-A1- 2003 099 010
- US-B1- 6 269 204
- US-B1- 6 396 575
- US-B1- 7 289 729

## Description

### FIELD OF THE INVENTION

The present invention relates to the field of optical network technologies, and in particular, to a fault detection method and device for an optical distribution network, and an optical network system.

### BACKGROUND OF THE INVENTION

With the development of broadband technologies, a passive optical network (Passive Optical Network, PON) technology is one of the most widely used fiber to the home (Fiber To The Home, FTTH) technologies at present. As the PON network is more and more frequently used, the technology for detecting whether the PON network has a fault is more and more important. At present, an optical time domain reflectometer (Optical Time Domain Reflectometer, OTDR) is mainly used to detect performance of an optical path and locate a fault in the optical path. When the OTDR is used to perform online detection on the PON network, the OTDR adopts a 1625 nm/1650 nm wavelength, thereby keeping away from an operating wavelength of the PON network. The OTDR accesses an ODN network at an OLT side through a wavelength division multiplexing WDM device, and during detection, the OTDR sends, to a fiber, an optical signal for test, and then observes the returned information. This process is repeated, and then the results are averaged and displayed in a form of a track, and the track represents the strength of the signal in the entire fiber, thereby implementing online detection of a fiber link of the PON network.

Generally, a structure of the PON network is as follows: a fiber passes through a 1:2 optical splitter from the optical line terminal OLT to a building or directly gets to the building, and then each branch fiber gets access to each subscriber in the building through an optical splitter with a high splitting ratio. The high splitting ratio results in high loss. In order to improve a dynamic range of the OTDR detection, the OTDR in the prior art generally adopts a test optical pulse with a wide frequency band. However, the use of the wide test optical pulse may lower the resolution of a reflection event, so that the OTDR cannot differentiate intensive reflection peaks, in that the OTDR cannot accurately detect whether each branch fiber after the optical splitter has a fault.

WO 96/31022 A1 discloses an optical network which includes a plurality of branches in an optical fibre line between a station-end and a plurality of end users. The network includes in the region of each end user a combination of reflectors which create a reflection pattern that is unique to that end user. By having a unique reflection pattern it is possible to identify a relatively large number of end users (and other points in the network) using only a relatively small number of different wavelengths.

US 2003/0099010 A1 discloses the monitoring of the performance of an optical network by introducing a fiber identification (FID) tag and/or bundle identification (BID) tag which are unique to the fiber section and to the bundle of fibers respectively. The FID tag is introduced by marking an optical signal, traveling through a section of fiber, with a low frequency dither tone whose frequency is unique to the fiber section. Similarly, the BID tag is introduced by marking an optical signal, traveling through a section of fiber in a bundle of fibers, with another low frequency dither tone whose frequency is unique to the bundle section. Detecting of the FID and BID tones either alone or along with an optionally introduced channel identification (CID) tone, which is unique to the optical signal, provides more effective and accurate monitoring of performance of the optical network and allows determining of the network topology, e.g. paths of optical channels and traffic load through different fiber sections in the network.

### SUMMARY OF THE INVENTION

Accordingly, embodiments of the present invention provide a fault detection method and device of an optical distribution network, and an optical network system, so as to solve the problem in the prior art that an OTDR cannot accurately detect whether each branch fiber after an optical splitter has a fault, so that fast and accurately detecting and locating a fault of the optical distribution network are implemented, and the stability of a passive optical network PON system is improved.

To solve the above problem, in one aspect, the present invention provides a detection method of a branch fiber, where at least one optical identifier equipment is disposed on a backbone fiber and at least one optical identifier equipment is disposed on each branch fiber in the optical distribution network, and the optical identifier equipment uniquely identifies the backbone fiber through an address code, and the optical identifier equipment uniquely identifies the branch fiber through an address code. The method includes: sending an optical signal to the optical distribution network, where the optical signal is an optical signal for test; receiving the optical signal returned from each optical identifier equipment in the optical distribution network, performing signal processing on the returned optical signal, and obtaining an address code of each optical identifier equipment; and detecting whether a fiber corresponding to the address code has a fault according to the obtained address code of each optical identifier equipment.

The performing signal processing on the returned optical signal and obtaining an address code of each optical identifier equipment comprises:
converting, by an optical-to-electrical converter, the returned optical signal into a corresponding electric signal;
converting, by an analog digital converter, the converted electric signal into a corresponding digital signal, and extracting a frequency component from the converted digital signal; and
searching for correspondence between a frequency component and an address code according to the extracted frequency component, and obtaining an address code corresponding to the frequency component; wherein the address code of the optical identifier equipment(ID1-4, ID301-313, ID401-407, ID501-507) comprises a segment address and an offset address, the segment address is used to identify each section of the optical distribution network, and the offset address is used to identify a backbone fiber, branch fibers, or an optical splitter in a same section.

In another aspect, the present invention further provides a fault detection device of an optical distribution network, where the device includes an optical identifier analyzer and at least one optical identifier equipment. The optical identifier equipment is disposed on a backbone fiber, and is disposed on each branch fiber in the optical distribution network, and uniquely identifies the backbone fiber through an address code and uniquely identifies each branch fiber through an address code; and the optical identifier analyzer is located in a central office end

The optical identifier analyzer is configured to send an optical signal to the optical distribution network, where the optical signal is an optical signal for test; receive an optical signal returned from each optical identifier equipment in the optical distribution network, perform signal processing on the returned optical signal, and obtain an address code of each optical identifier equipment; and detect whether a fiber corresponding to the address code has a fault according to the obtained address code of each optical identifier equipment. The optical identifier analyzer comprises:
a tunable light source or a broadband light source, configured to send an optical signal to the optical distribution network;
an optical-to-electrical converter, configured to receive the optical signal returned from each optical identifier equipment in the optical distribution network, and converting the returned optical signal into a corresponding electric signal;
an analog digital converter, configured to convert the converted electric signal into a corresponding digital signal;
a signal processing unit, configured to extract a frequency component from the converted digital signal; and
a detection unit, configured to search for correspondence between a frequency component and an address code according to the extracted frequency component, obtain an address code corresponding to the frequency component, and detect whether a fiber corresponding to the address code has a fault according to the obtained address code of each optical identifier equipment.

The optical identifier equipment is configured to return the optical signal sent by the optical identifier analyzer to the optical identifier analyzer; wherein the address code of the optical identifier equipment (ID401-407, ID501-507) comprises a segment address and an offset address the segment address is used to identify each section of the optical distribution network, and the offset address is used to identify a backbone fiber or branch fibers in a same section, or identify a backbone fiber, branch fibers, or an optical splitter in a same section.

In another aspect, the present invention further provides an optical network system, where the optical network system includes an optical line terminal, an optical distribution network and an optical network unit. The optical line terminal is connected to the optical network unit through the optical distribution network, and the optical distribution network includes a backbone fiber, branch fibers and an optical splitter. The optical network system further includes: an optical identifier analyzer and at least one optical identifier equipment, where the optical identifier equipment is disposed on the backbone fiber and is disposed on each branch fiber in the optical distribution network, and uniquely identifies the backbone fiber through an address code and uniquely identifies each branch fiber through an address code; and the optical identifier analyzer is located in a central office end.

The optical identifier analyzer is configured to send an optical signal to the optical distribution network, where the optical signal is an optical signal for test; receive an optical signal returned from each optical identifier equipment in the optical distribution network, analyze the returned optical signal, and obtain an address code of each optical, identifier equipment; and detect whether a fiber corresponding to the address code has a fault according to the obtained address code of each optical identifier equipment.

The optical identifier analyzer comprises:
a tunable light source or a broadband light source, configured to send an optical signal to the optical distribution network;
an optical-to-electrical converter, configured to receive the optical signal returned from each optical identifier equipment in the optical distribution network, and converting the returned
optical signal into a corresponding electric signal;
an analog digital converter, configured to convert the converted electric signal into a corresponding digital signal;
a signal processing unit, configured to extract a frequency component from the converted digital signal; and
a detection unit, configured to search for correspondence between a frequency component and an address code according to the extracted frequency component, obtain an address code corresponding to the frequency component, and detect whether a fiber corresponding to the address code has a fault according to the obtained address code of each optical identifier equipment.

The optical identifier equipment is configured to return the optical signal sent from the optical identifier analyzer to the optical identifier analyzer; wherein the address code of the optical identifier equipment (ID401-407, ID501-507) comprises a segment address and an offset address, the segment address is used to identify each section of the optical distribution network, and the offset address is used to identify a backbone fiber or branch fibers in a same section, or identify a backbone fiber, branch fibers, or an optical splitter in a same section.

In the fault detection method and device of the optical distribution network and the optical network system provided by the present invention, at least one optical identifier equipment is disposed on the backbone fiber and each branch fiber in the optical distribution network, and the optical identifier equipment uniquely identifies the backbone fiber through the address code and uniquely identifies each branch fiber through the address code. After an optical signal for test is sent to the optical distribution network, an optical signal returned from each optical identifier equipment in the optical distribution network is received and analyzed, and then an address code of each optical identifier equipment is obtained; and it is detected whether a fiber corresponding to the address code has a fault according to the obtained address code of each optical identifier equipment. The problem in the prior art that an OTDR cannot accurately detect whether each branch fiber after an optical splitter has a fault is solved, fast and accurate detection and location of a fault in the optical distribution network are implemented, and the stability of a passive optical network PON system is improved.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only about some embodiments of the present invention, and persons of ordinary skill in the art can derive other drawings from the accompanying drawings without creative efforts.
FIG. 1 is a flow chart of a detection method of a branch fiber provided by an embodiment of the present invention;
FIG. 2 is a schematic structural diagram of an optical distribution network provided by an embodiment of the present invention;
FIG. 3 is a schematic structural diagram of another optical distribution network provided by an embodiment of the present invention;
FIG. 4 is a schematic structural diagram of a fault detection device of an optical distribution network provided by an embodiment of the present invention; and
FIG. 5 is a schematic structural diagram of an optical network system provided by an embodiment of the present invention.

### DETAILED DESCRIPTION OF THE EMBODIMENTS

To make the objectives, technical solutions and advantages of the embodiments of the present invention much clearer, the technical solutions of the embodiments of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

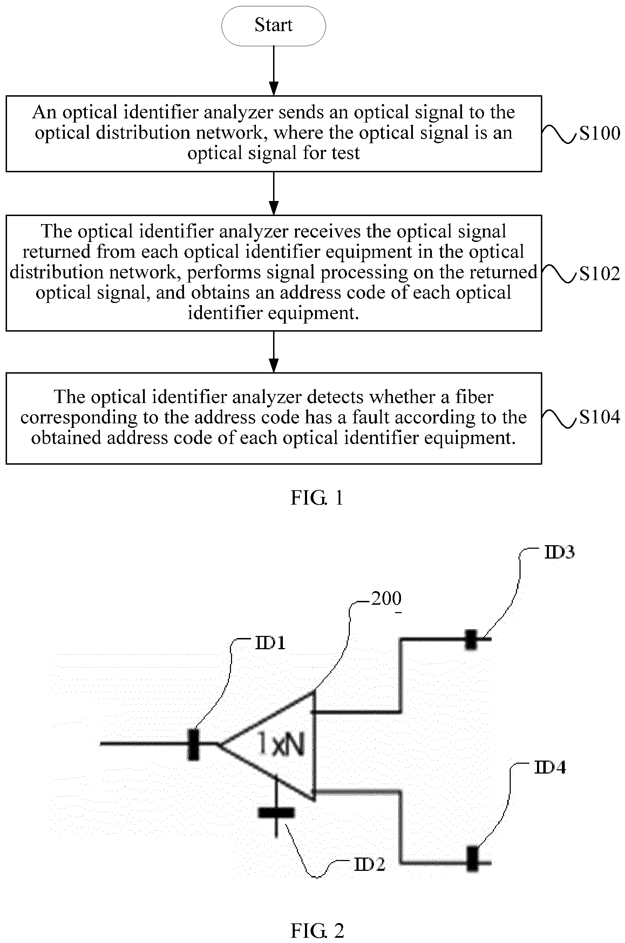

The present invention provides a fault detection method of an optical distribution network, and a flow chart of the method is shown in FIG. 1, which is specifically as follows.

At least one optical identifier equipment is disposed on a backbone fiber and at least one optical identifier equipment is disposed on each branch fiber in the optical distribution network, and the optical identifier equipment uniquely identifies the backbone fiber through an address code and the optical identifier equipment uniquely identifies each branch fiber through an address code. The method includes the following steps.

S100: An optical identifier analyzer sends an optical signal to the optical distribution network, where the optical signal is an optical signal for test.

S102: The optical identifier analyzer receives an optical signal returned from each optical identifier equipment in the optical distribution network, performs signal processing on the returned optical signal, and obtains an address code of each optical identifier equipment.

This step is specifically as follows.

The optical identifier analyzer converts the returned optical signal into a corresponding electric signal through an optical-to-electrical converter of the optical identifier analyzer; converts the converted electric signal into a corresponding digital signal through an analog digital converter of the optical identifier analyzer, and extracts a frequency component from the converted digital signal; searches for correspondence between a frequency component and an address code according to the extracted frequency component, and obtains an address code corresponding to the frequency component.

The correspondence between the frequency component and the address code is pre-stored in the optical identifier analyzer.

S104: The optical identifier analyzer detects whether a fiber corresponding to the address code has a fault according to the obtained address code of each optical identifier equipment.

Further, the optical identifier analyzer checks whether a default address code exists in an entry of the address code or whether the obtained address code of each optical identifier equipment is correct according to the obtained address code of each piece of optical identifier equipment. If a default address code exists or the address code that is fed back has an error, it may be precisely detected that a fiber corresponding to the address code or an optical splitter has a fault. The optical identifier equipment is disposed on each segment of fiber in the optical distribution network, and the optical identifier equipment uniquely identifies, through the address code, the fiber where the optical identifier equipment is located, and therefore, with the above method, a fiber that has a fault can be fast and accurately located and a segment which has a fault and is in the fiber can be even precisely located.

The method further includes the following.

At least one optical identifier equipment is disposed on at least one optical splitter in the optical distribution network, and the optical identifier equipment uniquely identifies the optical splitter through the address code. With the above detection method, whether the optical splitter where each optical identifier equipment in the optical distribution network is located has a fault can be precisely located.

The address code of the optical identifier equipment includes a segment address and an offset address, where the segment address is used to identify each section of the optical distribution network, and the offset address is used to identify a backbone fiber, branch fibers, or an optical splitter in the same section.

Further, the optical analyzer may further scan each optical identifier equipment in the optical distribution network and perform signal processing on the optical signal returned from each optical identifier equipment, and then obtain the offset address of each optical identifier equipment, so as to obtain an online state of the optical identifier equipment, and meanwhile, may obtain, in a time division multiplexing manner, the time at which each optical identifier equipment returns the optical signal, finally determine a specific position of the fiber or a specific position of the optical splitter corresponding to each optical identifier equipment according to the offset address of the optical identifier equipment and information of the time, and may detect whether each device in the optical distribution network and the fiber have a fault.

A structure of the address code of an optical identifier equipment and an addressing manner for the address code are specifically illustrated in the following.

FIG. 2 is a schematic structural diagram of an optical distribution network. As shown in FIG. 2, the optical distribution network includes a 1*N optical splitter.

One end of the optical splitter is connected to a central office device (for example, a central office device: an optical line terminal) through a backbone fiber, and the other end of the optical splitter is connected to an optical network unit through at least two branch fibers. Optical identifier equipment 1 (Optical Identifier equipment, ID indicates the optical identifier equipment in the following) is disposed on a backbone fiber, and optical identifier equipment ID2 is disposed on the optical splitter 200, and ID3 and ID4 are disposed on the branch fibers, respectively. Any one of the optical identifier equipment IDs has a unique address code used for uniquely identifying a fiber and an optical splitter that are corresponding to each optical identifier equipment (where the optical identifier equipment may be disposed on the optical splitter or not, and for more precisely locating a condition of each device in the optical distribution network, the optical identifier equipment is also disposed on the optical splitter in the following). The address code corresponding to each optical identifier equipment ID includes: a segment address and an offset address, where the segment address is used to identify each section of the optical distribution network, and the offset address is used to identify a backbone fiber, branch fibers or and an optical splitter in the same section. It should be noted that, multiple manners for addressing the address code corresponding to each optical identifier equipment ID may exist, so as to uniquely determine a position of the fiber corresponding to the optical identifier equipment and a position of the optical splitter corresponding to the optical identifier equipment, and further precisely locate a fault in the optical distribution network and a topology structure. One of the addressing manners is illustrated in the following, but the present invention is not limited thereto.
(1) In the optical distribution network shown in FIG. 2, sections are divided generally according to the hierarchy of the optical splitter, where a backbone fiber before the optical splitter is a section, the optical splitter is a section, and a fiber after the optical splitter is a section, and the optical distribution network shown in FIG. 2 may be divided into three sections according to the above section dividing principle, that is, FIG. 2 shows single-level splitting optical distribution network with three sections.
(2) A segment address is allocated to the optical identifier equipment on each section. For example, in FIG. 2, segment addresses are successively set for the optical identifier equipments on the three sections, that is, a segment address #00 is allocated to ID1 on the first section, a segment address #01 is allocated to ID2 of the optical splitter on the second section, and a segment address #02 is allocated to ID3 and ID4 on the third section, for example, a segment address #01 is allocated to ID1 and ID2, and a segment address #02 is allocated to ID3 and ID4.
(3) The offset address is used to identify a backbone fiber, branch fibers or an optical splitter in the same section. For example, as shown in FIG. 2, offset addresses are allocated to ID1-ID4 once, for example, the offset address of ID1 is #00, the offset address of ID2 is #01, the offset address of ID3 is #02, and the offset address of ID4 is #05. Since ID3 and ID4 are in the same section, ID3 and ID4 may be differentiated from each other through the offset addresses, that is, the branch fibers corresponding to ID3 and ID4 may be further identified through the offset addresses.

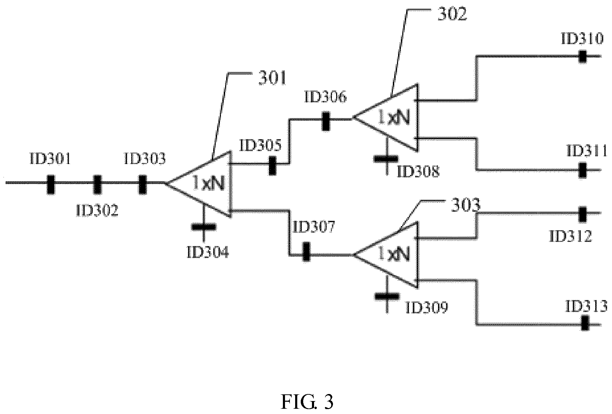

To sum up, one segment address may be allocated to each section according to the above encoding rule of the address code of each optical identifier equipment. The division for the offset addresses in the address codes of the optical identifier equipments may have, but is not limited to, the following situations, and provided that an address code formed by an offset address and a segment address can uniquely identify the fiber or the optical splitter where the optical identifier equipment is located, such situations all fall within the protection scope of the present application.
(1) An offset address is allocated to each sub-segment (that is, each fiber and optical splitter in the same section) in one section. As for an ODN section formed by the fiber, the offset address may be allocated with a basic length of the fiber which rolls like a cable disk (that is, the length of the fiber) as a unit. Generally, the offset address is allocated with 2 km fiber or 5 km fiber as one section, so as to differentiate information, such as installation positions of different connecting boxes in an ODN network or a residual length of the fiber remained in a disk. For example, in FIG. 2, if the length of a backbone fiber from a central office (Central Office, CO) device (for example, an optical line terminal OLT) to the 1*N optical splitter is 4 km, one optical identifier equipment is installed at a connecting box on the backbone fiber per 2 km, and in this way, two optical identifier equipments may be installed, for example, the two optical identifier equipments are ID5 and ID6 (not shown). ID5 and ID6 are both located on the backbone fiber and belong to the same section, so according to the above encoding rule, segment addresses of ID5 and ID6 are both #00, and offset addresses #00 and #01 may be allocated to ID5 and ID6. In this way, the address codes of ID5 and ID6 are #0000 and #0001, respectively.
(2) As for an ODN section independently formed by a passive optical device, different offset addresses are used to indicate installation hierarchies of the passive optical devices, for example, an optical splitter No.1 Stage of a first hierarchy or an optical splitter No.2 Stage of a second hierarchy, and a device type, such as a splitting ratio. Such a situation occurs in the case that optical splitters of multiple stages exist in the optical distribution network and a splitting ratio of each optical splitter is different, the details are described below when a schematic structural diagram of another optical distribution network in FIG. 3 is illustrated.

Through the above addressing manner, the address codes corresponding to the optical identifier equipments ID1-ID4 in FIG. 2 are #0000, #0101, #0202 and #0203, respectively, and the address code corresponding to each optical identifier equipment uniquely identifies the position of each fiber and uniquely identifies the position of each device in the optical distribution network. In addition, a topological structure diagram of the optical distribution network can be easily obtained based on the uniqueness of the above address codes and the addressing rule, and then a construction status and a running status of each device in the optical distribution network can be further obtained, thereby implementing functions of construction acceptance, fault diagnosis and responsibility determination.

FIG. 3 is a schematic structural diagram of another optical distribution network. The optical distribution network includes three optical splitters, and a splitting ratio 1*N of each optical splitter may the same or different. A first optical splitter 301 is connected to a central office device through a backbone fiber; and one end of the second optical splitter 302 is connected to the first optical splitter through a branch fiber and one end of the second optical splitter 303 is connected to the first optical splitter through a branch fiber, and the other end of the second optical splitter 302 is connected to each optical network unit (Optical Network Unit, ONU) through a branch fiber and the other end of the second optical splitter 303 is connected to each optical network unit (Optical Network Unit, ONU) through a branch fiber. Since the length of a backbone fiber from an optical line terminal to the first optical splitter 301 is at least 6 km, one optical identifier equipment ID is disposed on the fiber per 2 km, and three optical identifier equipments ID301-ID303 can be disposed herein. Optical identifier equipment ID304 is disposed on the first optical splitter ID304, ID305-ID307 are respectively disposed on a branch fiber of each segment between the primary optical splitter 301 and the secondary optical splitters 302 and 303 , the optical identifier equipment ID308 is disposed on the second optical splitter 302, the optical identifier equipment ID309 is disposed on the second optical splitter 303, and the optical identity equipment ID310-ID313 are respectively disposed on the branch fiber between the secondary optical splitters and each optical network unit ONU.

According to the above encoding rule, the optical distribution network shown in FIG. 3 is divided into 5 sections, and segment addresses successively allocated to the sections are #00-#04, respectively. An optical identifier equipment in the same section is differentiated with an offset address, and successively allocated offset addresses are #00-#09. Therefore, the address code of the optical identifier equipment ID in the optical distribution network ranges from #0000 to #0409. Definitely, the same offset address may be allocated to different segments whose segment addresses are different, which is described successively in the following.

ID301, ID302 and ID303 are in the same section and all have a segment address #00, and offset addresses #01, #02 and #03 are successively allocated to ID301-ID303, respectively, that is, address codes of ID301-ID303 are #0001, #0002 and #0003, respectively.

ID304 is located on the optical splitter 301 and belongs to another section, and then #01 is used to identify the segment address. At this time, an offset address #00 is used to identify ID304, and then an address code of ID304 is #0100. Definitely, ID304 may also be identified with the offset address that is successively allocated, that is, an offset address #04 is allocated, and at this time, an address code of ID304 is #0104.

ID305, ID306 and ID307 belong to another section, a segment address #02 is used to identify ID305, ID306 and ID307, and their respective offset addresses are 00, 01 and 02. At this time, address codes of ID505, ID506 and ID507 are #0200, #0201 and #0202; or ID305, ID306 and ID307 are identified by the offset addresses that are successively allocated, and then the address codes are #0205, #0206 and #0207, respectively.

According to the above encoding rule, the optical identifier equipment ID308 is located on the second optical splitter 302, and the optical identifier equipment ID309 is located on the second optical splitter 303, and then an address code of ID308 is #0300 and #0301 or may be set to #0308 and #0309. Address codes of optical identifier equipments ID310-ID313 on the branch fibers after the second optical splitters may be #0400 and #0403, or #0410 and #0413.

Therefore, a topological structure diagram of the optical distribution network can be easily obtained based on the uniqueness of the address code of each optical identifier equipment and the addressing rule, and then a construction status and a running status of each device in the optical distribution network can be further obtained, thereby implementing functions of construction acceptance, fault diagnosis and responsibility determination, and moreover, the addressing manner is easily implemented.

According to the detection method of the branch fiber provided by the embodiment of the present invention, at least one optical identifier equipment is disposed on the backbone fiber and at least one optical identifier equipment is disposed on each branch fiber in the optical distribution network, and the optical identifier equipment uniquely identifies the backbone fiber through an address code and the optical identifier equipment uniquely identifies each branch fiber through an address code. After an optical signal for test is sent to the optical distribution network, an optical signal returned from each optical identifier equipment in the optical distribution network is received and analyzed, and then an address code of each optical identifier equipment is obtained; and it is detected whether a fiber corresponding to the address code has a fault according to the obtained address code of each optical identifier equipment. The problem in the prior art that an OTDR cannot accurately detect whether each branch fiber after an optical splitter has a fault is solved, fast and accurate detection and location of a fault in the optical distribution network are implemented, and the stability of a passive optical network PON system is improved.

An embodiment of the present invention further provides a fault detection device of an optical distribution network, where the device includes an optical identifier analyzer and at least one optical identifier equipment. The optical identifier equipment is disposed on a backbone fiber and is disposed on each branch fiber in the optical distribution network, and uniquely identifies the backbone fiber through an address code and uniquely identifies each branch fiber through an address code; and the optical identifier analyzer is located in a central office end.

The optical identifier analyzer is configured to send an optical signal to the optical distribution network, where the optical signal is an optical signal for test; receive an optical signal returned from each optical identifier equipment in the optical distribution network, perform signal processing on the returned optical signal, and obtain an address code of each optical identifier equipment; and detect whether a fiber corresponding to the address code has a fault according to the obtained address code of each optical identifier equipment.

The optical identifier equipment is configured to return the optical signal sent from the optical identifier analyzer to the optical identifier analyzer.

Further, the optical identifier equipment is disposed on an optical splitter in the optical distribution network, and uniquely identifies the optical splitter through an address code.

The address code of the optical identifier equipment includes a segment address and an offset address, where the segment address is used to identify each section of the optical distribution network, and the offset address is used to identify a backbone fiber or branch fibers in the same section, or is used to identify a backbone fiber, branch fibers, or an optical splitter in the same section.

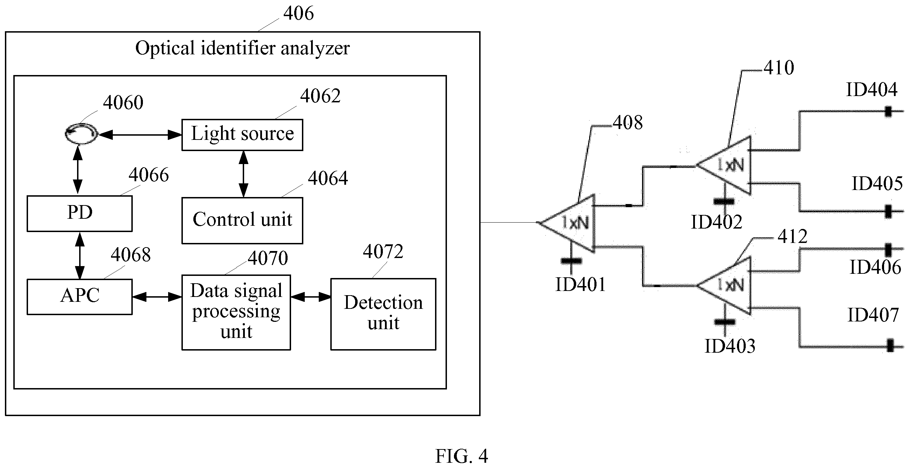

As for a specific structure, reference is made to a fault detection device of an optical distribution network shown in FIG. 4, where the fault detection device includes: an optical identifier analyzer 406 which is connected to a 1*N optical splitter 408 through a backbone fiber. The optical splitter 408 is connected to each of an optical splitter 410 and an optical splitter 412 through a branch fiber. Optical identifier equipment ID401 is disposed on the optical splitter 408, optical identifier equipment ID402 is disposed on the optical splitter 410, ID403 is disposed on the optical splitter 412, and ID404-ID407 are disposed on branch fibers, respectively, where splitting ratios of the optical splitters may be the same or different.

The optical identifier analyzer 406 may include: a circulator 4060, a light source 4062, a control unit 4064, an optical-to-electrical converter, namely, a photo diode (Photo Diode, PD) 4066, an analog digital converter (Analog Digital Converter, ADC) 4068, a data signal processing unit 4070 and a detection unit 4072. A light source may be a broadband light source (Broadband Light Source, BLS) or a tunable light source (Tunable Light Source, TLS), and successively emits a pre-determined optical signal for test, such as an optical signal with a certain frequency in a certain waveband (used for determining a unique segment address), through the control of the control unit 4064. The optical signal is sent to each optical identifier equipment in the optical distribution network through the circulator, the optical identifier equipment whose reflection wavelength range is in the range of the waveband may reflect back the optical signal for test, the PD4066 receives the returned optical signal for test, and the ADC4068 converts the optical signal into a digital signal and records the digital signal in the data signal processing unit; after the control unit 4064 controls the TLS or the BLS to scan a certain waveband, the data signal processing unit extracts a frequency component from the stored digital signal, for example, extracts a frequency component through an algorithm, such as Fast Fourier transform (Fast Fourier Transform, FFT), and sends the extracted frequency component to the detection unit 4072; and the detection unit 4072 searches for correspondence between a frequency component and an address code according to the extracted frequency component, obtains an address code corresponding to the frequency component, and detects whether a fiber corresponding to the address code has a fault according to the obtained address code of each optical identifier equipment. For example, the detection unit 4072 pre-stores the correspondence between the frequency component and the address code, obtains that an address code #0001 of ID401 by searching for the correspondence, and determines that the optical splitter 408 identified by ID401 has a fault if the obtained address code of ID401 is not #0001.

In addition, when the light source is the BLS, the optical identifier analyzer further includes a tunable band pass filter (Tunable Band Pass Filter, TBPF) to filter the optical signal.

Since the ADC in the optical identifier analyzer adopts a clock signal for scanning, the fault detection device of the optical distribution network further has a time division multiplexing characteristic, that is, the fault detection device can differentiate the time corresponding to the optical signal for test reflected by an optical identifier equipment, so as to accurately acquire specific position information of the optical identifier equipment; and finally, whether a fiber or device where the optical identifier equipment is located has a fault is further determined according to the position information, state information, and pre-stored position information and state information.

The optical identifier equipments (ID401-ID405) each are configured to reflect the optical signal that is used for test and is sent from the optical identifier analyzer. The optical identifier equipment may be an FP (Fabry-Perot) device based on a CFBG (Chirp Fiber Bragg Grating) string or based on an end surface coating, or Etalon, or an extrinsic FP device.

When the optical identifier equipment is the FP device based on the CFBG string, the CFBG string is used to form an intrinsic FP cavity. When a resonant cavity of the FP has a fixed material, that is, a refractive index is fixed, an FSR (Free Spectrum Range) of the FP is merely correlated to the length of the resonant cavity (referred to as cavity length, if no ambiguity exists), that is, is inversely proportional to the cavity length. Therefore, in this embodiment, through improvement on a conventional CFBG manufacturing process, the cavity length is precisely controlled by using a precise mechanical equipment, so that the distance between two CFBGs on the CFBG string can be precisely controlled, that is, the cavity length is controllable, so as to form optical ID devices with different address codes. In this embodiment, a cavity length interval is 100 um±10 um. Therefore, when the cavity length varies from 11000 um to 17400 um, optical ID devices with 64 address codes may be formed. The cavity length interval may be set to any numerical value according to the process, so an intrinsic FP, which is formed by a CFBG string with any cavity length interval, as an optical ID device falls within the scope of the present invention.

When the optical identifier equipment is an intrinsic FP, a extrinsic FP device formed by a end surface coating may be used to replace the intrinsic FP according to the actual requirements, and at this time, the end surface coating with a pre-determined reflectivity is used to replace the CFBG in the CFBG string, to reflect the optical signal for test. When the extrinsic FP is used, as the precise grinding of a medium forming the resonant cavity is controlled, optical ID devices for implementing more address codes may be obtained. In addition, the intrinsic FP device in a CFBG string type may also be replaced by an intrinsic FP device of another type. Since it is emphasized in the present invention that the FSR of an FP cavity is used as an address, different FSRs are obtained by precisely controlling the cavity length when an FP device of any type is adopted, and the obtained FSRs are used as unique address codes, which all fall within the protection scope of the present invention.

In the fault detection device of the optical distribution network provided by the embodiment of the present invention, the optical identifier analyzer sends an optical signal for test to the optical distribution network, receives an optical signal returned from each optical identifier equipment in the optical distribution network, performs signal processing on the returned optical signal, and obtains an address code of each optical identifier equipment; and detects whether a fiber corresponding to the address code has a fault according to the obtained address code of each optical identifier equipment. The problem in the prior art that an OTDR cannot accurately detect whether each branch fiber after an optical splitter has a fault is solved, fast and accurate detection and location of a fault in the optical distribution network are implemented, and the stability of a passive optical network PON system is improved.

An embodiment of the present invention further provides an optical network system, where the optical network system includes an optical line terminal, an optical distribution network and an optical network unit. The optical line terminal is connected to the optical network unit through the optical distribution network, and the optical distribution network includes a backbone fiber, branch fibers and an optical splitter. The optical network system further includes: an optical identifier analyzer and at least one optical identifier equipment, where the optical identifier equipment is disposed on the backbone fiber and is disposed on each branch fiber in the optical distribution network and uniquely identifies the backbone fiber through an address code and uniquely identifies each branch fiber through an address code, and the optical identifier analyzer is located in a central office end.

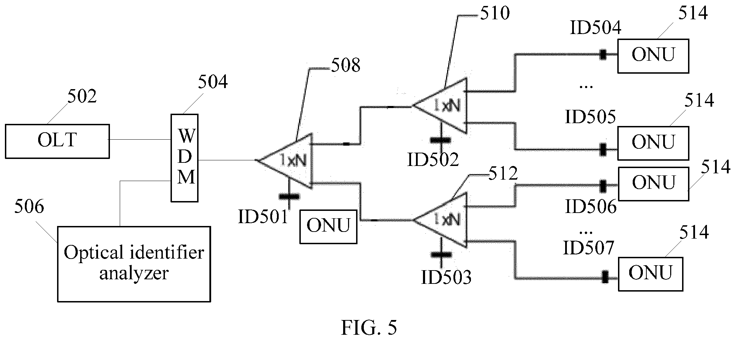

A specific structure is shown in FIG. 5, and the optical network system includes: an optical line terminal (Optical Line Terminal, OLT) 502 and an optical identifier analyzer 506, which are both connected to a 1*8 optical splitter 508 through a wavelength division multiplexer (Wavelength Division Multiplexer, WDM) 504. The OLT 502 is connected to the optical splitter 508 through a backbone fiber, the optical splitter 508 is connected to multiple optical network units (Optical Network Units, ONUs) 514 through an optical splitter 510 and an optical splitter 512, and the optical splitter 510 and the optical splitter 514 are connected to the ONUs 514 through branch fibers.

The optical identifier analyzer 506 is configured to send an optical signal to the optical distribution network, where the optical signal is an optical signal for test; receive an optical signal returned from each optical identifier equipment in the optical distribution network, perform signal processing on the returned optical signal, and obtain an address code of each optical identifier equipment; and detect whether a fiber corresponding to the address code has a fault according to the obtained address code of each optical identifier equipment. As for the specific structure of the optical identifier analyzer 506, reference is made to the description in FIG. 4 and the corresponding embodiment.

The optical identifier equipments (ID501-ID505) each are configured to return the optical signal sent from the optical identifier analyzer to the optical identifier analyzer.

The optical identifier equipment is disposed on an optical splitter in the optical distribution network, and uniquely identifies the optical splitter through an address code. The address code of the optical identifier equipment includes a segment address and an offset address, where the segment address is used to identify each section of the optical distribution network, and the offset address is used to identify a backbone fiber or branch fibers in the same section, or is used to identify a backbone fiber, branch fibers, or an optical splitter in the same section.

In the optical network system provided by the present invention, at least one optical identifier equipment is disposed on the backbone fiber and at least one optical identifier equipment is disposed on each branch fiber in the optical distribution network, and the optical identifier equipment uniquely identifies the backbone fiber through an address code and the optical identifier equipment uniquely identifies each branch fiber through an address code. After an optical signal for test is sent to the optical distribution network, an optical signal returned from each optical identifier equipment in the optical distribution network is received and analyzed, and then an address code of each optical identifier equipment is obtained; it is detected whether a fiber corresponding to the address code has a fault according to the obtained address code of each optical identifier equipment. The problem in the prior art that an OTDR cannot accurately detect whether each branch fiber after an optical splitter has a fault is solved, fast and accurate detection and location of a fault in the optical distribution network are implemented, and the stability of a passive optical network PON system is improved.

The above descriptions are merely about exemplary embodiments of the present invention. It should be noted that several modifications and variations may be made by persons of ordinary skill in the art without departing from the principle of the present invention, and such modifications and variations should be construed as falling within the protection scope of the present invention.

## Claims

1. A fault detection method of an optical distribution network, wherein at least one optical identifier equipment (ID1-4, ID301-313, ID401-407, ID501-507) is disposed on a backbone fiber and is disposed on each branch fiber in the optical distribution network, and the optical identifier equipment uniquely identifies the backbone fiber through an address code and uniquely identifies each branch fiber through an address code, and the method comprises:
sending (S100) an optical signal to the optical distribution network, wherein the optical signal is an optical signal for test;
receiving (S102) the optical signal returned from each optical identifier equipment in the optical distribution network, performing signal processing on the returned optical signal, and obtaining an address code of each optical identifier equipment, wherein the performing signal processing on the returned optical signal and obtaining an address code of each optical identifier equipment comprises:
converting, by an optical-to-electrical converter, the returned optical signal into a corresponding electric signal;
converting, by an analog digital converter, the converted electric signal into a corresponding digital signal, and extracting a frequency component from the converted digital signal; and
searching for correspondence between a frequency component and an address code according to the extracted frequency component, and obtaining an address code corresponding to the frequency component; and
detecting (S104) whether a fiber corresponding to the address code has a fault according to the obtained address code of each optical identifier equipment;
wherein the address code of the optical identifier equipment (ID1-4, ID301-313, ID401-407, ID501-507) comprises a segment address and an offset address, the segment address is used to identify each section of the optical distribution network, and the offset address is used to identify a backbone fiber, branch fibers, or an optical splitter in a same section.

2. The fault detection method according to claim 1, further comprising:
disposing at least one optical identifier equipment (ID2, ID304, ID308, ID309, ID401-403, ID501-503) on at least one optical splitter(200, 301, 302, 303, 408, 410, 412) in the optical distribution network, wherein the optical identifier equipment uniquely (ID2, ID304, ID308, ID309, ID401-403, ID501-503) identifies the optical splitter through an address code.

3. A fault detection device of an optical distribution network, comprising: an optical identifier analyzer (406, 506) and at least one optical identifier equipment (ID401-407, ID501-507), wherein the optical identifier equipment (ID401-407, ID501-507) is disposed on a backbone fiber and is disposed on each branch fiber in the optical distribution network and uniquely identifies the backbone fiber through an address code and uniquely identifies each branch fiber through an address code, and the optical identifier analyzer (406, 506) is located in a central office end;
the optical identifier analyzer (406, 506) is configured to send an optical signal to the optical distribution network, wherein the optical signal is an optical signal for test; receive an optical signal returned from each optical identifier equipment (ID401-407, ID501-507) in the optical distribution network, perform signal processing on the returned optical signal, and obtain an address code of each optical identifier equipment (ID401-407, ID501-507); and detect whether a fiber corresponding to the address code has a fault according to the obtained address code of each optical identifier equipment, wherein the optical identifier analyzer (406, 506) comprises:
a tunable light source or a broadband light source (4062), configured to send an optical signal to the optical distribution network;
an optical-to-electrical converter (4066), configured to receive the optical signal returned from each optical identifier equipment in the optical distribution network, and converting the returned optical signal into a corresponding electric signal;
an analog digital converter (4068), configured to convert the converted electric signal into a corresponding digital signal;
a signal processing unit (4070), configured to extract a frequency component from the converted digital signal; and
a detection unit (4072), configured to search for correspondence between a frequency component and an address code according to the extracted frequency component, obtain an address code corresponding to the frequency component, and detect whether a fiber corresponding to the address code has a fault according to the obtained address code of each optical identifier equipment; and
the optical identifier equipment (ID401-407, ID501-507) is configured to return the optical signal sent from the optical identifier analyzer to the optical identifier analyzer;
wherein the address code of the optical identifier equipment (ID401-407, ID501-507) comprises a segment address and an offset address, the segment address is used to identify each section of the optical distribution network, and the offset address is used to identify a backbone fiber or branch fibers in a same section, or identify a backbone fiber, branch fibers, or an optical splitter in a same section.

4. The fault detection device according to claim 3, wherein the optical identifier equipment (ID401-407, ID501-507) is disposed on an optical splitter in the optical distribution network, and uniquely identifies the optical splitter through an address code.

5. An optical network system, comprising an optical line terminal (502), an optical distribution network and an optical network unit (514), wherein the optical line terminal (502) is connected to the optical network unit through the optical distribution network, the optical distribution network comprises a backbone fiber, branch fibers and an optical splitter (508, 510, 512); wherein the optical network system further comprises a fault detection device of an optical distribution network according to any one of claims 3 and 4.

6. The optical network system according to claim 5, wherein the optical signal for test sent from the optical identifier analyzer (406, 506) and an optical signal sent from the optical line terminal (502) are converged through a wavelength division multiplexer, and then the converged optical signal is sent to the optical distribution network.

7. The optical network system according to claim 5, wherein the optical identifier equipment (ID401-407, ID501-507) is disposed on an optical splitter (408, 410, 412, 508, 510, 512) in the optical distribution network, and uniquely identifies the optical splitter (408, 410, 412, 508, 510, 512) through an address code.

## Patentansprüche

1. Fehlerdetektionsverfahren eines optischen Verteilnetzes, wobei mindestens eine optische Kennungsausrüstung (ID1-4, ID301-313, ID401-407, ID501-507) sich auf einer Hauptfaser befindet und sich auf jeder Zweigfaser in dem optischen Verteilnetz befindet und die optische Kennungsausrüstung die Hauptfaser durch einen Adresscode eindeutig identifiziert und jede Zweigfaser durch einen Adresscode eindeutig identifiziert, und das Verfahren Folgendes umfasst:
Senden (S100) eines optischen Signals an das optische Verteilnetz, wobei das optische Signal ein optisches Testsignal ist;
Empfangen (S102) des optischen Signals, das von jeder optischen Kennungsausrüstung in dem optischen Verteilnetz zurückgesendet wird, Durchführen von Signalverarbeitung an dem zurückgesendeten optischen Signal und Erhalten eines Adresscodes jeder optischen Kennungsausrüstung, wobei das Durchführen von Signalverarbeitung an dem zurückgesendeten optischen Signal und Erhalten eines Adresscodes jeder optischen Kennungsausrüstung Folgendes umfasst:
Umwandeln des zurückgesendeten optischen Signals in ein entsprechendes elektrisches Signal mittels eines optoelektronischen Wandlers;
Umwandeln des umgewandelten elektrischen Signals in ein entsprechendes Digitalsignal mittels eines Analog-Digital-Wandlers und Extrahieren einer Frequenzkomponente aus dem umgewandelten Digitalsignal und
Suchen nach Entsprechung zwischen einer Frequenzkomponente und einem Adresscode gemäß der extrahierten Frequenzkomponente und Erhalten eines Adresscodes entsprechend der Frequenzkomponente und
Detektieren (S104), ob eine dem Adresscode entsprechende Faser einen Fehler entsprechend dem erhaltenen Adresscode jeder optischen Kennungsausrüstung aufweist;
wobei der Adresscode der optischen Kennungsausrüstung (ID1-4, ID301-313, ID401-407, ID501-507) eine Segmentadresse und eine Versatzadresse umfasst, wobei die Segmentadresse dazu verwendet wird, jeden Abschnitt des optischen Verteilnetzes zu identifizieren, und die Versatzadresse dazu verwendet wird, eine Hauptfaser, Zweigfasern oder einen optischen Teiler in einem gleichen Abschnitt zu identifizieren.

2. Fehlerdetektionsverfahren nach Anspruch 1, ferner umfassend:
Anordnen mindestens einer optischen Kennungsausrüstung (ID2, ID304, ID308, ID309, ID401-403, ID501-503) auf mindestens einem optischen Teiler (200, 301, 302, 303, 408, 410, 412) in dem optischen Verteilnetz, wobei die optische Kennungsausrüstung (ID2, ID304, ID308, ID309, ID401-403, ID501-503) den optischen Teiler durch einen Adresscode eindeutig identifiziert.

3. Fehlerdetektionseinsrichtung eines optischen Verteilnetzes, umfassend: einen optischen Kennungsanalysator (406, 506) und mindestens eine optische Kennungsausrüstung (ID401-407, ID501-507), wobei die optische Kennungsausrüstung (ID401-407, ID501-507) sich auf einer Hauptfaser befindet und sich auf jeder Zweigfaser in dem optischen Verteilnetz befindet und die Hauptfaser durch einen Adresscode eindeutig identifiziert und jede Zweigfaser durch einen Adresscode eindeutig identifiziert und der optische Kennungsanalysator (406, 506) sich in einem Zentralstellenende befindet;
der optische Kennungsanalysator (406, 506) dazu konfiguriert ist, ein optisches Signal an das optische Verteilnetz zu senden, wobei das optische Signal ein optisches Testsignal ist; ein optisches Signal, das von jeder optischen Kennungsausrüstung (ID401-407, ID501-507) in dem optischen Verteilnetz zurückgesendet wird, zu empfangen, Signalverarbeitung am zurückgesendeten optischen Signal durchzuführen und einen Adresscode jeder optischen Kennungsausrüstung (ID401-407, ID501-507) zu erhalten; und zu detektieren, ob eine dem Adresscode entsprechende Faser einen Fehler gemäß dem erhaltenen Adresscode jeder optischen Kennungsausrüstung aufweist, wobei der optische Kennungsanalysator (406, 506) Folgendes umfasst:
eine stimmbare Lichtquelle oder eine Breitbandlichtquelle (4062), die dazu konfiguriert ist, ein optisches Signal an das optische Verteilnetz zu senden;
einen optoelektronischen Wandler (4066), der dazu konfiguriert ist, das optische Signal, das von jeder optischen Kennungsausrüstung in dem optischen Verteilnetz zurückgesendet wird, zu empfangen und das zurückgesendete optische Signal in ein entsprechendes elektrisches Signal umzuwandeln;
einen Analog-Digital-Wandler (4068), der dazu konfiguriert ist, das umgewandelte elektrische Signal in ein entsprechendes Digitalsignal umzuwandeln;
eine Signalverarbeitungseinheit (4070), die dazu konfiguriert ist, eine Frequenzkomponente aus dem umgewandelten Digitalsignal zu extrahieren; und
eine Detektionseinheit (4072), die dazu konfiguriert ist, nach Übereinstimmung zwischen einer Frequenzkomponente und einem Adresscode gemäß der extrahierten Frequenzkomponente zu suchen, einen Adresscode entsprechend der Frequenzkomponente zu erhalten und zu detektieren, ob eine dem Adresscode entsprechende Faser einen Fehler gemäß dem erhaltenen Adresscode jeder optischen Kennungsausrüstung aufweist; und
die optische Kennungsausrüstung (ID401-407, ID501-507) dazu konfiguriert ist, das optische Signal, das von dem optischen Kennungsanalysator gesendet wurde, an den optischen Kennungsanalysator zurückzusenden;
wobei der Adresscode der optischen Kennungsausrüstung (ID401-407, ID501-507) eine Segmentadresse und eine Versatzadresse umfasst, wobei die Segmentadresse dazu verwendet wird, jeden Abschnitt des optischen Verteilnetzes zu identifizieren, und die Versatzadresse dazu verwendet wird, eine Hauptfaser oder Zweigfasern in einem gleichen Abschnitt zu identifizieren oder eine Hauptfaser, Zweigfasern oder einen optischen Teiler in einem gleichen Abschnitt zu identifizieren.

4. Fehlerdetektionseinrichtung nach Anspruch 3, wobei die optische Kennungsausrüstung (ID401-407, ID501-507) sich auf einem optischen Teiler in dem optischen Verteilnetz befindet und den optischen Teiler durch einen Adresscode eindeutig identifiziert.

5. Optisches Netzwerksystem, umfassend einen optischen Leitungsanschluss (502), ein optisches Verteilnetz und eine optische Netzeinheit (514), wobei der optische Leitungsanschluss (502) mit der optischen Netzeinheit durch das optische Verteilnetz verbunden ist, das optische Verteilnetz eine Hauptfaser, Zweigfasern und einen optischen Teiler (508, 510, 512) umfasst; wobei das optische Netzwerksystem ferner eine Fehlerdetektionseinrichtung eines optischen Verteilnetzes nach einem der Ansprüche 3 und 4 umfasst.

6. Optisches Netzwerksystem nach Anspruch 5, wobei das optische Testsignal, das von dem optischen Kennungsanalysator (406, 506) gesendet wurde, und ein optisches Signal, das von dem optischen Leitungsanschluss (502) gesendet wurde, durch einen Wellenlängenmultiplexer konvergiert werden und das konvergierte optische Signal daraufhin an das optische Verteilnetz gesendet wird.

7. Optisches Netzwerksystem nach Anspruch 5, wobei die optische Kennungsausrüstung (ID401-407, ID501-507) sich auf einem optischen Teiler (408, 410, 412, 508, 510, 512) in dem optischen Verteilnetz befindet und den optischen Teiler (408, 410, 412, 508, 510, 512) durch einen Adresscode eindeutig identifiziert.

## Revendications

1. Procédé de détection de défaut d'un réseau de distribution optique, dans lequel au moins un équipement d'identification optique (ID1-4, ID301-313, ID401-407, ID501-507) est disposé sur une fibre centrale et est disposé sur chaque fibre latérale dans le réseau de distribution optique, et l'équipement d'identification optique identifie de façon unique la fibre centrale par un code d'adresse et identifie de façon unique chaque fibre latérale par un code d'adresse, et le procédé comprend :
l'envoi (S100) d'un signal optique au réseau de distribution optique, le signal optique étant un signal optique de test ;
la réception (S 102) du signal optique retourné depuis chaque équipement d'identification optique dans le réseau de distribution optique, la réalisation d'un traitement du signal sur le signal optique retourné, et l'obtention d'un code d'adresse de chaque équipement d'identification optique, la réalisation du traitement du signal sur le signal optique retourné et l'obtention d'un code d'adresse de chaque équipement d'identification optique comprenant :
la conversion, par un convertisseur optique-électrique, du signal optique retourné en un signal électrique correspondant ;
la conversion, par un convertisseur analogique-numérique, du signal électrique converti en un signal numérique correspondant, et l'extraction d'une composante de fréquence du signal numérique converti ; et
la recherche d'une correspondance entre une composante de fréquence et un code d'adresse en fonction de la composante de fréquence extraite, et l'obtention d'un code d'adresse correspondant à la composante de fréquence ; et
la détection (S104) qu'une fibre correspondant au code d'adresse a ou non un défaut en fonction du code d'adresse obtenu de chaque équipement d'identification optique ;
dans lequel le code d'adresse de l'équipement d'identification optique (ID1-4, ID301-313, ID401-407, ID501-507) comprend une adresse de segment et une adresse de décalage, l'adresse de segment étant utilisée pour identifier chaque section du réseau de distribution optique, et l'adresse de décalage étant utilisée pour identifier une fibre centrale, des fibres latérales ou un séparateur optique dans une même section.

2. Procédé de détection de défaut selon la revendication 1, comprenant en outre :
l'installation d'au moins un équipement d'identification optique (ID2, ID304, ID308, ID309, ID401-403, ID501-503) sur au moins un séparateur optique (200, 301, 302, 303, 408, 410, 412) dans le réseau de distribution optique, l'équipement d'identification optique (ID2, ID304, ID308, ID309, ID401-403, ID501-503) identifiant de façon unique le séparateur optique par un code d'adresse.

3. Dispositif de détection de défaut d'un réseau de distribution optique, comprenant : un analyseur d'identification optique (406, 506) et au moins un équipement d'identification optique (ID401-407, ID501-507), dans lequel l'équipement d'identification optique (ID401-407, ID501-507) est disposé sur une fibre centrale et est disposé sur chaque fibre latérale dans le réseau de distribution optique et identifie de façon unique la fibre centrale par un code d'adresse et identifie de façon unique chaque fibre latérale par un code d'adresse, et l'analyseur d'identification optique (406, 506) est situé dans une extrémité de central :
l'analyseur d'identification optique (406, 506) est configuré pour envoyer un signal optique au réseau de distribution optique, le signal optique étant un signal optique de test ; recevoir un signal optique retourné depuis chaque équipement d'identification optique (ID401-407, ID501-507) dans le réseau de distribution optique, réaliser un traitement du signal sur le signal optique retourné, et obtenir un code d'adresse de chaque équipement d'identification optique (ID401-407, ID501-507) ; et détecter si une fibre correspondant au code d'adresse a un défaut en fonction du code d'adresse obtenu de chaque équipement d'identification optique, l'analyseur d'identification optique (406, 506) comprenant :
une source de lumière accordable ou une source de lumière à large bande (4062), configurée pour envoyer un signal optique au réseau de distribution optique ;
un convertisseur optique-électrique (4066), configuré pour recevoir le signal optique retourné depuis chaque équipement d'identification optique dans le réseau de distribution optique, et convertir le signal optique retourné en un signal électrique correspondant ;
un convertisseur analogique-numérique (4068), configuré pour convertir le signal électrique converti en un signal numérique correspondant ;
une unité de traitement du signal (4070), configurée pour extraire une composante de fréquence du signal numérique converti ; et
une unité de détection (4072), configurée pour rechercher une correspondance entre une composante de fréquence et un code d'adresse en fonction de la composante de fréquence extraite, obtenir un code d'adresse correspondant à la composante de fréquence, et détecter si une fibre correspondant au code d'adresse a un défaut en fonction du code d'adresse obtenu de chaque équipement d'identification optique ; et l'équipement d'identification optique (ID401-407, ID501-507) est configuré pour retourner le signal optique envoyé depuis l'analyseur d'identification optique à l'analyseur d'identification optique ;
dans lequel le code d'adresse de l'équipement d'identification optique (ID401-407, ID501-507) comprend une adresse de segment et une adresse de décalage, l'adresse de segment étant utilisée pour identifier chaque section du réseau de distribution optique, et l'adresse de décalage étant utilisée pour identifier une fibre centrale ou des fibres latérales dans une même section, ou identifier une fibre centrale, des fibres latérales ou un séparateur optique dans une même section.

4. Dispositif de détection de défaut selon la revendication 3, dans lequel l'équipement d'identification optique (ID401-407, ID501-507) est disposé sur un séparateur optique dans le réseau de distribution optique, et identifie de façon unique le séparateur optique par un code d'adresse.

5. Système de réseau optique, comprenant un terminal de ligne optique (502), un réseau de distribution optique et une unité de réseau optique (514), dans lequel le terminal de ligne optique (502) est relié à l'unité de réseau optique par le réseau de distribution optique, le réseau de distribution optique comprend une fibre centrale, des fibres latérales et un séparateur optique (508, 510, 512) ; le système de réseau optique comprenant en outre un dispositif de détection de défaut d'un réseau de distribution optique selon l'une quelconque des revendications 3 et 4.

6. Système de réseau optique selon la revendication 5, dans lequel le signal optique de test envoyé depuis l'analyseur d'identification optique (406, 506) et un signal optique envoyé depuis le terminal de ligne optique (502) sont combinés par un multiplexeur par répartition en longueur d'onde, et le signal optique combiné est ensuite envoyé au réseau de distribution optique.

7. Système de réseau optique selon la revendication 5, dans lequel l'équipement d'identification optique (ID401-407, ID501-507) est disposé sur un séparateur optique (408, 410, 412, 508, 510, 512) dans le réseau de distribution optique, et identifie de façon unique le séparateur optique (408, 410, 412, 508, 510, 512) par un code d'adresse.
